# EUROPÄISCHE PATENTSCHRIFT

(11) **EP 2 758 762 B1**
(45) Veröffentlichungstag und Bekanntmachung des Hinweises auf die Patenterteilung: **04.11.2015**
(21) Anmeldenummer: 12756007.6
(22) Anmeldetag: 06.09.2012
(51) Int. Cl.: G01L 27/00, G07C 5/00, B60R 21/36, B60R 21/0136

(54) **VORRICHTUNG ZUR ERFASSUNG DES AUFPRALLS EINES OBJEKTS AUF EIN FAHRZEUG**
DEVICE FOR DETECTING THE IMPACT OF AN OBJECT ON A VEHICLE
DISPOSITIF DE DÉTECTION D'UNE COLLISION ENTRE UN OBJET ET UN VÉHICULE

(30) Priorität: 20.09.2011 DE 102011083027
(43) Veröffentlichungstag der Anmeldung: 30.07.2014
(73) Patentinhaber: Bayerische Motoren Werke Aktiengesellschaft, 80809 München (DE)
(72) Erfinder: MEIR, Frank, 82362 Weilheim (DE); EISENMANN, Lutz, 85256 Vierkirchen (DE)
(74) Vertreter: Günther, Hans Peter
(86) Internationale Anmeldenummer: PCT/EP2012/067419
(87) Internationale Veröffentlichungsnummer: WO 2013/041383

(56) Entgegenhaltungen:
- EP-A1- 1 870 688
- DE-A1- 10 232 523
- DE-A1-102006 053 962
- DE-A1-102007 044 814

## Beschreibung

Die Erfindung betrifft eine Vorrichtung und ein Verfahren zur Erfassung des Aufpralls eines Objekts auf ein Fahrzeug. Die Vorrichtung umfasst einen mit einem Befüllmedium gefüllten Schlauch, der ein erstes Ende und ein dem ersten Ende gegenüberliegendes zweites Ende aufweist. Ein erster Drucksensor ist mit dem ersten Ende des Schlauches und ein zweiter Drucksensor mit dem zweiten Ende des Schlauches verbunden, wobei der erste und der zweite Drucksensor jeweils ein den Druck des Befüllmediums repräsentierendes Signal bereit stellen. Ferner verfügt die Vorrichtung über eine Recheneinheit, welche über Anschlussleitungen mit dem ersten und dem zweiten Sensor zum Austausch von Daten verbunden ist, wobei die Recheneinheit zur Verarbeitung der von dem ersten und dem zweiten Drucksensor empfangenen Signale ausgebildet ist.

Eine derartige Vorrichtung wird insbesondere in Fußgänger-Schutz-Systemen im vorderen Stoßfänger eines Fahrzeugs verbaut. Die Vorrichtung besteht aus zwei elektrischen Drucksensoren, die miteinander mit einem hochflexiblen Schlauch, z.B. aus Gummi, Kautschuk oder Latex, dicht verbunden sind. Der Schlauch ist üblicherweise mit Luft befüllt, wobei der im Inneren des Schlauches herrschende Druck aufgrund eines in dem Schlauch vorgesehenen Druckausgleichselements dem Umgebungsdruck entspricht. Das Druckausgleichselement besteht in der Regel aus einer Membran, durch die Luft in beiden Richtungen hindurch dringen kann. Die Membran ist derart ausgebildet, dass jedoch kein Wasser und kein Schmutz in das Innere des Schlauches eindringen können. Eine Angleichung des im Inneren des Schlauches herrschenden Druck an den Umgebungsdruck erfolgt innerhalb von Sekunden, bspw. bei einer Passfahrt oder starken Temperaturschwankungen. Die Drucksensoren sind elektrisch über Anschlussleitungen an eine Recheneinheit (Electronic Control Unit, ECU) angeschlossen. Über die Anschlussleitungen erfolgt üblicherweise nicht nur die Signalübertragung von den Drucksensoren an die Recheneinheit. Ebenso werden die Drucksensoren über die Anschlussleitungen mit der für ihren Betrieb erforderlichen Spannung versorgt.

Eine äußere Krafteinwirkung auf den Schlauch hat eine Druckänderung des im Inneren des Schlauches herrschenden Drucks (Innendrucks) zur Folge. Die Druckänderung wird von den beiden Drucksensoren registriert. Ja nachdem, an welcher Stelle die Druckbeaufschlagung bzw. äußere Krafteinwirkung erfolgt, kann die Sensierung der Druckänderung an den beiden Drucksensoren zeitversetzt erfolgen. In der Recheneinheit oder alternativ einer der Recheneinheit nachgeschalteten Auswerteeinheit erfolgt die Auswertung der Druckänderung. Insbesondere wird hierbei der zeitliche Verlauf der Druckänderung ausgewertet, wobei in Abhängigkeit der Ergebnisse der Auswertung eine Entscheidung über die Auslösung geeigneter Schutzmaßnahmen erfolgt. Im Falle eines Fußgänger-Schutz-Systems könnten die Schutzmaßnahmen darin bestehen, die Motorhaube des Fahrzeuges anzuheben, sodass nach einem Aufprall des Kopfes und/oder des Körpers einer Person ein größerer Verformungsweg zum Abbau von Energie zur Verfügung steht. Die Schutzmaßnahmen können auch einen Scheibenairbag (Pedestrian Protection Airbag) umfassen. Hierdurch können Verletzungen der Person gemildert werden.

Als Drucksensoren in der oben beschriebenen Vorrichtung werden in der Regel Derivate von herkömmlichen Drucksensoren, wie diese bspw. in den Türen eines Fahrzeugs zur Erkennung eines Seitenaufpralls verwendet werden, eingesetzt. Derartige Sensoren basieren darauf, einen Änderungsdruck zu detektieren. Dies bedeutet, mit jeder Messung wird der Druckunterschied zum letzten Messwert ermittelt. Im Ergebnis wird dadurch ein Druckverlauf ausgewertet. Derartige Sensoren sind diagnosefähig. Dies bedeutet, durch die Recheneinheit oder die nachgeschaltete Auswerteeinheit kann festgestellt werden, ob ein jeweiliger Drucksensor an sich funktionsfähig ist.

Die Anbindung des Schlauchs an die Drucksensoren erfolgt zumeist dadurch, dass die Schlauchenden über korrespondierende Anschlussstutzen der Drucksensoren gesteckt werden. Eine mechanische Fixierung kann über Schellen erfolgen (auch andere Fixierungen sind vorstellbar). Über die Zeit kann der Schlauch, bspw. durch Temperatureinflüsse oder Reibstellen brüchig oder porös werden. Ebenso können Risse des Schlauches nicht ausgeschlossen werden. Auch im Betrieb der Vorrichtung, sogar beim Verbau eines Neuteils, kann nicht sichergestellt werden, dass der Schlauch und die Anbindung des Schlauchs an die Drucksensoren dicht sind. Hierdurch ist jedoch die Funktionsfähigkeit der Vorrichtung zur Erfassung des Aufpralls eines Objekts nicht mehr sicher gewährleistet.

Undichtigkeiten haben zur Folge, dass eine durch äußere Krafteinwirkung, d.h. den Aufprall eines Objekts, resultierende Druckänderung der Luft im Inneren des Schlauches nicht oder nicht genügend erkannt werden. Dies hat jedoch direkten Einfluss auf den für die Erkennung eines Aufpralls verwendeten Algorithmus und damit auf die Entscheidung über die Auslösung einer Schutzmaßnahme. Im schlechtesten Fall, einem gerissenen Schlauch oder einer geöffneten Schlauchanbindung an einen der Drucksensoren, ist unter Umständen sogar an keinem der beiden Drucksensoren eine Druckänderung mehr detektierbar, sodass beim Aufprall eines Fußgängers auf das Fahrzeug keine Schutzmaßnahmen ausgelöst werden.

In DE 102 007 044 814 wird eine Funktionsprüfung des Schlauches offenbart mittels einer Widerstandsmessung einer Füllflüssigkeil. Für Luftgefüllte Schläuche ist jedoch bislang keine Diagnose bzgl. der Funktionsfähigkeit des Schlauches möglich. Hierdurch ist auch eine Plausibilisierung der von den beiden Drucksensoren gelieferten Signale nicht möglich, da prinzipiell nicht sichergestellt werden kann, dass die Vorrichtung im Gesamten funktionsfähig ist. Aus diesem Grund sind derartige Vorrichtungen derart ausgelegt, dass die Auslösung der Schutzvorrichtung bereits aufgrund eines von einem Drucksensor übermittelten Signales erfolgen kann.

Es ist daher Aufgabe der vorliegenden Erfindung, eine Vorrichtung und ein Verfahren zur Erfassung des Aufpralls eines Objekts auf ein Fahrzeug anzugeben, welche die Diagnosefähigkeit der gesamten Vorrichtung ermöglichen.

Diese Aufgaben werden gelöst durch eine Vorrichtung gemäß den Merkmalen des Patentanspruches 1 und ein Verfahren gemäß den Merkmalen des Patentanspruches 10. Vorteilhafte Ausgestaltungen ergeben sich aus den abhängigen Patentansprüchen.

Die Erfindung schafft eine Vorrichtung zur Erfassung des Aufpralls eines Objekts auf ein Fahrzeug. Die Vorrichtung umfasst einen mit einem Befüllmedium befüllten Schlauch, der ein erstes Ende und ein dem ersten Ende gegenüberliegendes zweites Ende aufweist. Ein erster Drucksensor ist mit dem ersten Ende des Schlauches verbunden. Ein zweiter Drucksensor ist mit dem zweiten Ende des Schlauches verbunden. Der erste und der zweite Drucksensor stellt jeweils ein den Druck des Befüllmediums repräsentierendes Signal bereit. Die Vorrichtung umfasst ferner eine Recheneinheit, welche über Anschlussleitungen mit dem ersten und dem zweiten Sensor zum Austausch von Daten verbunden ist, wobei die Recheneinheit zur Verarbeitung der von dem ersten und von dem zweiten Drucksensor empfangenen Signale ausgebildet ist.

Erfindungsgemäß ist der Schlauch gegenüber der Umgebung und dem ersten und dem zweiten Drucksensor abgedichtet, sodass der in dem Schlauch herrschende Innendruck des Befüllmediums unabhängig ist von einem Umgebungsdruck und dadurch abhängig von einer Temperaturschwankung. Die Recheneinheit ist dazu ausgebildet, temperaturbedingte Änderungen des Innendrucks im Betrieb des Fahrzeugs als Kriterium für die Diagnose der Funktionsfähigkeit der Vorrichtung zu verarbeiten.

Dadurch, dass der Schlauch gegenüber der Umgebung und dem ersten und dem zweiten Drucksensor abgedichtet ist, wird der Innendruck des Schlauchs vom Umgebungsluftdruck abgekoppelt. Mit jeder Fahrt des Fahrzeuges sind Temperaturschwankungen verbunden, welche den Innendruck beeinflussen. Diese langsamen Druckänderungen werden als Kriterium für eine Diagnose der Funktionsfähigkeit des Schlauches verwendet. Wenn im Umkehrschluss im Fahrbetrieb, d.h. einer jeweiligen Fahrt bzw. einem jeweiligen Fahrzyklus, es zu keiner Druckänderung kommt, kann auf einen undichten Schlauch oder eine undichte Anbindung des Schlauches an wenigstens einen der beiden Drucksensoren geschlossen werden. Hierdurch wird es ermöglicht, nicht nur die Drucksensoren hinsichtlich ihrer Funktionsfähigkeit zu diagnostizieren. Vielmehr ist es nun erstmalig möglich, auch den Schlauch indirekt auf seine Funktionsfähigkeit im Betrieb des Kraftfahrzeugs zu überprüfen.

Eine Abdichtung der Sensoren gegenüber der Umgebung wird dadurch erzielt, dass die Sensoren kein Druckausgleichselement umfassen. Ebenso ist vorgesehen, dass der erste und der zweite Drucksensor keine Belüftungsöffnungen umfassen oder evtl. vorhandene Belüftungsöffnungen der Drucksensoren luftdicht verschlossen sind. Belüftungsöffnungen der Drucksensoren dienen, sofern vorhanden, dazu, einen redundanten Druckausgleich zu einem Druckausgleichselement bereit zu stellen. Dies ist insbesondere dann erforderlich, wenn das Druckausgleichselement im Stoßfänger des Fahrzeugs derart angeordnet ist, dass dieses unter Umständen verschmutzen und daher seiner Funktion nicht mehr nachkommen kann.

Es kann weiterhin vorgesehen sein, dass die Diagnose der Funktionsfähigkeit der Vorrichtung eine Verarbeitung des Innendrucks über zumindest mehrere Minuten und/oder einen Fahrzyklus umfasst. Eine Zeitspanne von mehreren Minuten ist in der Regel erforderlich, um eine temperaturbedingte Druckschwankung des Innendrucks hervorzurufen. Alternativ oder zusätzlich kann die Diagnose des Schlauches dabei auch permanent in einem Fahrbetrieb zwischen dem Ein- und Ausschalten der Zündung durchgeführt werden. Dieser Fahrbetrieb stellt dann einen Fahrzyklus dar. Optional besteht auch die Möglichkeit, die Überwachung in Stillstandszeiten durchzuführen und beispielsweise Tag-Nacht-Temperaturveränderungen auszuwerten.

Wahlweise ist die Recheneinheit dazu ausgebildet, zur Diagnose der Funktionsfähigkeit der Vorrichtung den Druckverlauf des Innendrucks auszuwerten, wobei auf eine funktionsfähige Vorrichtung geschlossen wird, wenn innerhalb einer vorgegebenen Zeitspanne seit dem Startzeitpunkt eine vorgegebene Druckänderung in dem Druckverlauf ermittelt wird. Ebenso kann eine Druckänderung durch veränderten Luftdruck und durch eine Veränderung der Fahrzeughöhe gegenüber dem Meeresspiegel, z.B. bei Passfahrten, detektiert werden.

Ebenso kann die Recheneinheit dazu ausgebildet sein, zur Diagnose der Funktionsfähigkeit der Vorrichtung eine Druckdifferenz des Innendrucks zwischen einem Startzeitpunkt und einem Messzeitpunkt zu ermitteln, wobei auf eine funktionsfähige Vorrichtung geschlossen wird, wenn die Druckdifferenz einen vorgegebenen Schwellwert über eine vorgegebene Zeitspanne und/oder einen Fahrzyklus überschreitet. Dabei ist als Schwellwert die Überschreitung weniger Millibar an Druckdifferenz ausreichend, um auf die Funktionsfähigkeit von Schlauch und Anschlüssen des Schlauchs an die Drucksensoren schließen zu können.

Die in der zuerst genannten Ausführungsvariante beschriebene Zeitspanne und die Zeitdifferenz zwischen dem Messzeitpunkt und dem Startzeitpunkt können prinzipiell gleich groß sein. Grundsätzlich können diese auch unterschiedlich gewählt sein.

Es ist weiterhin zweckmäßig, wenn die Vorrichtung im Stoßfänger des Fahrzeugs benachbart zu einer Wärmequelle des Fahrzeugs angeordnet ist, um im Betrieb des Fahrzeugs, insbesondere nach einem Start des Fahrzeugs, innerhalb einer vorgegebenen Zeitspanne eine temperaturbedingte Innendruckänderung des Befüllmediums in dem Schlauch hervorzurufen. Die benachbarte Anordnung der Vorrichtung zu einer Wärmequelle, bspw. einem Wärmetauscher oder dem Motor selbst, ermöglicht eine schnellere Diagnose der Funktionsfähigkeit des Schlauchs, da die Temperaturerhöhung in kurzer Zeit verhältnismäßig hoch ist. Sofern eine unmittelbar benachbarte räumliche Anordnung zu einer Wärme abstrahlenden Komponente nicht möglich ist, kann ggf. vorgesehen sein, die Vorrichtung von Luft anströmen zu lassen, welche durch die Abwärme erzeugenden Komponenten erwärmt ist.

Es ist ausreichend, wenn die Drucksensoren einen Messbereich von mehr als ±20 mbar, insbesondere mehr als ±50 mbar und am meisten bevorzugt von ±100 mbar aufweisen. Dieser vergrößerte Messbereich ermöglicht es auch, nur geringe temperaturbedingte Druckunterschiede zu detektieren. Dies ist bspw. dann erforderlich, wenn die temperaturbedingten Druckänderungen lediglich aufgrund einer Änderung der Umgebungstemperatur verursacht sind.

Es ist weiterhin vorgesehen, dass der Messbereich in Abhängigkeit des in dem Schlauch vorgesehenen Volumens und Art (Medium) an Befüllmedium gewählt ist. Hierdurch kann der Dynamik des Messbereichs der Drucksensoren Rechnung getragen werden.

Prinzipiell ist es möglich, bei einer erfindungsgemäßen Vorrichtung die aus bekannten Fußgänger-Schutz-Systemen bekannten Drucksensoren zu verwenden. Beispielsweise können die einleitend bereits beschriebenen Drucksensoren, welche einen Änderungsdruck erfassen, eingesetzt werden.

Die erfindungsgemäße Vorrichtung weist den Vorteil auf, dass diese aufgrund des Entfalls von Druckausgleichselementen und der Verwendung von Drucksensoren, welche keine Belüftungsöffnungen umfassen, im Vergleich zu bekannten Vorrichtungen kostengünstiger bereitgestellt werden kann.

Darüber hinaus können aufwändige Halterungen bei der Integration der Vorrichtung in den Stoßfänger entfallen. Derartige Halterungen dienen üblicherweise dazu, den Schlauch vor Beschädigungen zu schützen, damit keine Risse und Beschädigungen im Betrieb des Fahrzeugs entstehen. Dies ist deshalb erforderlich, da bislang keine Diagnose der Funktionsfähigkeit des Schlauchs durchgeführt werden konnte.

Dadurch, dass nunmehr neben den Drucksensoren auch der Schlauch und dessen Anbindung an die Drucksensoren diagnostiziert werden kann, besteht die Möglichkeit, die von den beiden Drucksensoren gelieferten Signale zueinander zu plausibilisieren. Beispielsweise kann die Plausibilisierung darin bestehen, eine Schutzvorrichtung lediglich dann auszulösen, wenn beide Drucksensoren ein Signal liefern. Hierdurch kann eine erhöhte Funktionssicherheit bereitgestellt werden. Alternativ kann eine Implementierung darin bestehen, dass eine Auslösung der Schutzvorrichtung bereits beim Vorliegen eines Signals eines einzigen Drucksensors erfolgt. Das Signal des zweiten Drucksensors wird der Recheneinheit lediglich zu Redundanzzwecken zugeführt. Im Ergebnis kann dadurch die Funktionssicherheit der Vorrichtung verbessert werden. Insbesondere sind hiermit weniger Fehlauslösungen verbunden.

Die Erfindung schafft weiter ein Verfahren zum Überprüfen einer Vorrichtung zur Erfassung des Aufpralls eines Objekts auf ein Fahrzeug, wobei die Vorrichtung wie oben beschrieben, ausgebildet ist. Bei dem Verfahren wird zur Diagnose der Funktionsfähigkeit der Vorrichtung eine temperaturbedingte Änderung des Innendrucks im Betrieb des Fahrzeugs als Kriterium für die Diagnose der Funktionsfähigkeit der Vorrichtung verarbeitet.

Alternativ oder zusätzlich können auch Druckänderungen, die durch einen Höhenunterschied im Fahrzeugbetrieb resultieren, als Kriterien für die Diagnose der Funktionsfähigkeit der Vorrichtung verarbeitet werden.

Der Schlauch und/oder dessen Anbindung an den ersten und/oder zweiten Drucksensor wird als funktionsfähig klassifiziert, wenn innerhalb einer vorgegebenen Zeitspanne und/oder eines Fahrzyklus seit dem Startzeitpunkt eine vorgegebene Druckänderung in dem Druckverlauf ermittelt wird oder eine Druckdifferenz des Innendrucks zwischen einem Startzeitpunkt und einem Messzeitpunkt einen vorgegebenen Schwellwert überschreitet oder wenn sich die von den Drucksensoren gelieferten Signale unterscheiden.

Das erfindungsgemäße Verfahren weist die gleichen Vorteile auf, die bereits in Verbindung mit der erfindungsgemäßen Vorrichtung beschrieben wurden.

Die Erfindung und deren Vorteile werden nachfolgend näher anhand eines Ausführungsbeispiels in der Zeichnung erläutert. Die einzige Figur zeigt eine schematische Darstellung einer erfindungsgemäßen Vorrichtung zur Erfassung des Aufpralls eines Objekts auf ein Fahrzeug.

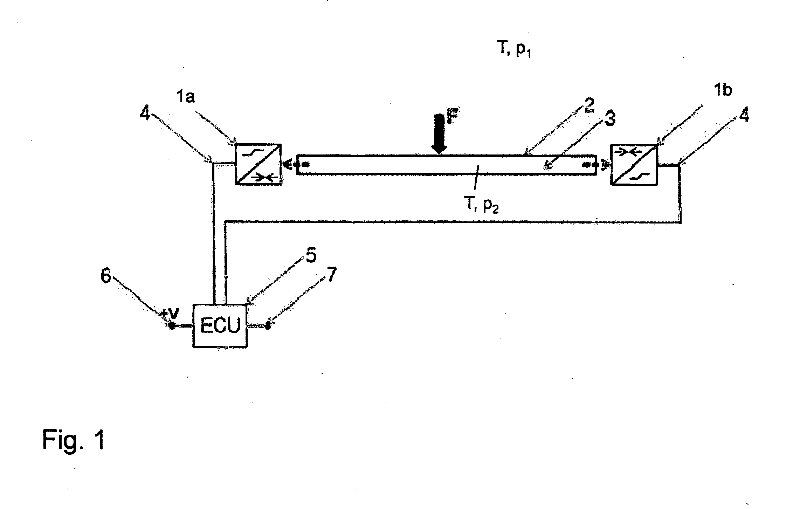

Fig. 1 zeigt eine schematische Darstellung einer erfindungsgemäßen Vorrichtung zur Erfassung des Aufpralls eines Objekts auf das Fahrzeug. Die Vorrichtung stellt die Sensorik eines Fußgänger-Schutz-Systems dar. Dieses umfasst zwei elektrische Drucksensoren 1a, 1b, die mit einem Schlauch 2 miteinander verbunden sind. Der Schlauch besteht aus einem Material, das eine hohe Flexibilität bei einer auf den Schlauch einwirkenden, äußeren Krafteinwirkung F aufweist. Der Schlauch kann z.B. aus Gummi, Kautschuk oder Latex bestehen. Alle drei Materialien weisen eine hohe Flexibilität in Reaktion auf eine äußere Krafteinwirkung F auf den Schlauch 2 auf. Über jeweilige Anschlussleitungen 4 sind die Drucksensoren 1 a, 1 b mit einer Recheneinheit 5 verbunden. Die Anschlussleitungen sind bevorzugt als Bus-System (PSI5, LIN, CAN usw.) ausgelegt, sodass neben dem Austausch von Daten auch eine Spannungsversorgung der Sensoren 1 a, 1 b durch die Recheneinheit 5 erfolgen kann.

In bekannter Weise wird die in Fig. 1 dargestellte Vorrichtung z.B. im Stoßfänger eines Kraftfahrzeugs über dessen gesamte Breite angeordnet. Eine äußere Krafteinwirkung F auf den Schlauch 2 hat eine Druckänderung des Innendrucks p₂ des Befüllmediums, in der Regel Luft oder ein Gas, zur Folge. Die Druckänderung wird von beiden Drucksensoren 1a, 1b registriert. Das Registrieren der Druckänderung kann je nach Lage der Krafteinwirkung durch die beiden Drucksensoren zeitversetzt erfolgen. Die Druckänderung ist abhängig von der Geschwindigkeit des Fahrzeugs, dem Gewicht des auftreffenden Objekts sowie der Außentemperatur. Eine erwachsene Person zieht z.B. eine größere Druckänderung als ein auf die Vorrichtung prallendes Kind oder sogar ein Ball nach sich. Aus der Höhe der Druckänderung kann bspw. auch auf die Art des aufprallenden Objekts geschlossen werden. Abhängig hiervon können geeignete Schutzmaßnahmen ausgelöst werden.

Die Drucksensoren können bspw. von herkömmlichen Drucksensoren abgeleitet sein, die in Fahrzeugen zur Crash-Erkennung in Türen eingesetzt werden. Bei solchen Drucksensoren ist die Diagnosefähigkeit der Sensoren selbst gegeben. Die Drucksensoren können somit automatisiert auf ihre mechanische und elektrische Funktionsfähigkeit hinsichtlich Druckerfassung und Weiterleitung eines den Druck repräsentierenden Signals an die Recheneinheit überprüft werden.

Die Vorrichtung wird vorzugsweise so ausgelegt, dass bei der niedrigsten spezifizierten Betriebstemperatur der Schlauch aufgrund des geringen Luftvolumens sich nicht zusammenzieht oder einschnürt. Dies hat zur Folge, dass bei Normaltemperatur gegebenenfalls ein Überdruck in dem Schlauch herrscht.

Im Gegensatz zu den aus dem Stand der Technik verwendeten Vorrichtungen weisen die Sensoren 1 a und 1 b kein Druckausgleichselement auf. Ebenso verfügen die Drucksensoren 1 a, 1 b über keine Belüftungsöffnungen. Evtl. vorhandene Bellüftungsöffnungen der Drucksensoren sind luftdicht verschlossen. Hierdurch wird der Innendruck p₂ vom Umgebungsluftdruck p₁ abgekoppelt. Aufgrund dessen ergibt sich eine Abhängigkeit des Innendrucks p₂ von der Temperatur T. Auf eine Funktionsfähigkeit der gesamten Vorrichtung kann dann geschlossen werden, wenn im Betrieb des Kraftfahrzeugs temperaturbedingte Änderungen des Innendrucks durch die Drucksensoren erfasst und detektiert werden können. Die temperaturbedingten Änderungen des Innendrucks werden im Betrieb des Fahrzeugs als Kriterium für die Diagnose der Funktionsfähigkeit der Vorrichtung verarbeitet.

Um eine temperaturbedingte Druckänderung feststellen zu können, wird die Messung über einen längeren Zeitraum, vorzugsweise zumindest mehrere Minuten oder über einen Fahrzyklus, durchgeführt. Die Diagnose der Unversehrtheit des Schlauchs und dessen Anbindung an die Drucksensoren 1 a, 1 b kann dadurch beschleunigt werden, dass im Betrieb des Fahrzeugs anfallende Abwärme zu einer vergleichweise schnellen temperaturbedingten Änderung des Innendrucks genutzt wird. Dies kann wahlweise durch die Integration der Vorrichtung, d.h. des Schlauchs in dem Stoßfänger derart erfolgen, dass dieser in der Nähe einer Abwärme erzeugenden Komponente angeordnet ist. Gegebenenfalls kann über in dem Stoßfänger vorgesehene Kanäle erwärmte Luft an den Schlauch 2 geleitet werden. Diese Vorgehensweise hat zur Folge, dass nach jedem Start des Fahrzeugs in verhältnismäßig kurzer Zeit eine Temperaturänderung des Befüllmediums herbeigefügt wird, die zu einer Änderung des Innendrucks in dem Schlauch führt, welche durch die beiden Drucksensoren 1 a, 1 b detektiert wird. Kann eine solche Änderung des Innendrucks nicht festgestellt werden, so liegt eine Undichtigkeit in dem Schlauch oder an den Anschlüssen zu den Drucksensoren 1a, 1b vor. Auch Druckänderungen durch Höhenänderungen, wie zum Beispiel eine Passfahrt, können ausgewertet werden.

Auf eine funktionsfähige Vorrichtung kann bspw. dann geschlossen werden, wenn der Druckverlauf des Innendrucks ausgewertet wird und innerhalb einer vorgegebenen Zeitspanne seit einem Startzeitpunkt, bspw. dem Start des Motors, eine vorgegebene Druckänderung in dem Druckverlauf ermittelt wird. Alternativ kann eine Druckdifferenz des Innendrucks zwischen einem Startzeitpunkt und einem Messzeitpunkt ermittelt werden, wobei die Vorrichtung dann als funktionsfähig betrachtet wird, wenn die Druckdifferenz einen vorgegebenen Schwellwert überschreitet. Dabei ist es ausreichend, wenn der Schwellwert nur wenige mbar beträgt.

Dadurch, dass kein Druckausgleichselement in der Vorrichtung vorgesehen sein muss, kann die Vorrichtung mit geringeren Kosten bereitgestellt werden. Dadurch, dass eine Beschädigung des Schlauches, bspw. aufgrund eines Risses oder eines Marderbisses detektiert werden kann, sind auch keine besonderen Maßnahmen zum Schutz des Schlauches vor Beschädigung erforderlich. Auch hierdurch können die Kosten, insbesondere für die Montage, gesenkt werden.

Dadurch, dass nunmehr sämtliche Komponenten der Vorrichtung plausibilisierbar sind, kann auch eine Plausibilisierung der von den beiden Drucksensoren gelieferten Drucksignale zueinander erfolgen. Grundsätzlich müssen bei einem intakten System beide Drucksensoren ein gleiches Signal liefern, das ggf. je nach Ort der Krafteinwirkung zeitverzögert durch die Recheneinheit erkannt wird. Allerdings können nunmehr die von den beiden Drucksensoren gelieferten Signale zur Erhöhung der Funktionssicherheit miteinander verknüpft werden. Dies bedeutet, lediglich dann, wenn beide Drucksensoren ein entsprechendes Signal an die Recheneinheit übertragen, erfolgt eine Auslösung einer in der Figur nicht gezeigten Schutzvorrichtung für den Fußgänger. Alternativ kann die Vorrichtung derart betrieben werden, dass lediglich das Signal eines der beiden Drucksensoren zur Auslösung einer Schutzvorrichtung verwendet wird. Hierdurch kann eine Auslösung der Schutzvorrichtung innerhalb einer geringeren Zeitspanne erfolgen. Das von dem zweiten Drucksensor gelieferte Signal wird lediglich zu Redundanzwecken verwendet. Oder man kann durch den Laufzeitunterschied die "Einschlagort" lokalisieren.

Dadurch, dass insbesondere temperaturbedingte Druckänderungen ausgewertet werden, kann eine schnellere Diagnose des Schlauches und dessen Anbindung an die Drucksensoren erfolgen, als wenn bspw. die Auswertung barometrischer Höhenunterschiede erfolgt. Gegebenenfalls kann es erforderlich sein, dass die bislang verwendeten Drucksensoren mit einem vergrößerten Messbereich ausgestattet werden. Während im Stand der Technik üblicherweise Messbereiche von ±20 mbar verwendet werden, kann erfindungsgemäß vorgesehen sein, den Messbereich auf bis zu ±100 mbar auszuweiten. Dies trägt der größeren, erforderlichen Dynamik Rechnung.
Wert entfernen, wie vorher nicht relevant.

## Patentansprüche

1. Vorrichtung zur Erfassung des Aufpralls eines Objekts auf ein Fahrzeug, umfassend:
- einen mit einem Befüllmedium (3) gefüllten Schlauch (2), der ein erstes Ende und ein dem ersten Ende gegenüberliegendes zweites Ende aufweist;
- einen ersten Drucksensor (1a), der mit dem ersten Ende des Schlauches und einen zweiten Drucksensor (1 b), der mit dem zweiten Ende des Schlauches verbunden ist, wobei der erste und der zweite Drucksensor (1a, 1b) jeweils ein den Druck des Befüllmediums (3) repräsentierendes Signal bereitstellen;
- eine Recheneinheit (5), welche über Anschlussleitungen (4) mit dem ersten und dem zweiten Drucksensor (1a, 1b) zum Austausch von Daten verbunden ist, wobei die Recheneinheit (5) zur Verarbeitung der von dem ersten und dem zweiten Drucksensor (1a, 1b) empfangenen Signale ausgebildet ist;
**dadurch gekennzeichnet, dass**
- der Schlauch (2) gegenüber der Umgebung und dem ersten und dem zweiten Drucksensor (1a, 1b) abgedichtet ist, so dass der in dem Schlauch (2) herrschende Innendruck (p₂) des Befüllmediums (3) unabhängig ist von einem Umgebungsdruck (p₁) und dadurch abhängig von einer Temperatur schwankt;
- die Recheneinheit (5) dazu ausgebildet ist, Temperaturbedingte Änderungen des Innendrucks (p₂) im Betrieb des Fahrzeugs als Kriterium für die Diagnose der Funktionsfähigkeit der Vorrichtung zu verarbeiten.

2. Vorrichtung nach Anspruch 1, **dadurch gekennzeichnet, dass** die Sensoren (1a, 1 b) kein Druckausgleichselement umfassen.

3. Vorrichtung nach Anspruch 1 oder 2, **dadurch gekennzeichnet, dass** der erste und der zweite Drucksensor (1a, 1b) keine Belüftungsöffnungen umfassen oder vorhandene Belüftungsöffnungen der Drucksensoren (1a, 1b) luftdicht verschlossen sind.

4. Vorrichtung nach einem vorhergehenden Ansprüche, **dadurch gekennzeichnet, dass** die Diagnose der Funktionsfähigkeit der Vorrichtung eine Verarbeitung des Innendrucks (p₂) über zumindest mehrere Minuten und/oder einen Fahrzyklus umfasst.

5. Vorrichtung nach einem der vorhergehenden Ansprüche, **dadurch gekennzeichnet, dass** die Recheneinheit (5) dazu ausgebildet ist, zur Diagnose der Funktionsfähigkeit der Vorrichtung den Druckverlauf des Innendrucks (p₂) auszuwerten, wobei auf eine funktionsfähige Vorrichtung geschlossen wird, wenn innerhalb einer vorgegeben Zeitspanne seit dem Startzeitpunkt eine vorgegebene Druckänderung in dem Druckverlauf ermittelt wird.

6. Vorrichtung nach einem der vorhergehenden Ansprüche, **dadurch gekennzeichnet, dass** die Recheneinheit (5) dazu ausgebildet ist, zur Diagnose der Funktionsfähigkeit der Vorrichtung eine Druckdifferenz des Innendrucks (p₂) zwischen einem Startzeitpunkt und einem Messzeitpunkt zu ermitteln, wobei auf eine funktionsfähige Vorrichtung geschlossen wird, wenn die Druckdifferenz einen vorgegebenen Schwellwert über einer vorgegebenen Zeitspanne und/oder einen Fahrzyklus überschreitet.

7. Vorrichtung nach einem der vorhergehenden Ansprüche, **dadurch gekennzeichnet, dass** die Vorrichtung im Stoßfänger des Fahrzeugs benachbart zu einer Wärmequelle des Fahrzeugs angeordnet ist, um im Betrieb des Fahrzeug, insbesondere nach einem Start des Fahrzeugs, innerhalb einer vorgegebenen Zeitspanne eine temperaturbedingte Innendruckänderung des Befüllmediums in dem Schlauch hervorzurufen.

8. Vorrichtung nach einem der vorhergehenden Ansprüche, bei dem die Drucksensoren (1a, 1 b) einen Messbereich von mehr als ±20 mbar, insbesondere mehr als ±50 mbar, am meisten bevorzugt ±100 mbar aufweisen.

9. Vorrichtung nach Anspruch 8, **dadurch gekennzeichnet, dass** der Messbereich in Abhängigkeit des in dem Schlauch vorgesehen Volumens oder Art an Befüllmedium gewählt ist.

10. Verfahren zum Überprüfen einer Vorrichtung zur Erfassung des Aufpralls eines Objekts auf ein Fahrzeug, umfassend:
- einen mit einem Befüllmedium (3) gefüllten Schlauch (2), der ein erstes Ende und ein dem ersten Ende gegenüberliegendes zweites Ende aufweist;
- einen ersten Drucksensor (1a), der mit dem ersten Ende des Schlauches und einen zweiten Drucksensor (1b), der mit dem zweiten Ende des Schlauches verbunden ist, wobei der erste und der zweite Drucksensor (1 a, 1 b) jeweils ein den Druck des Befüllmediums (3) repräsentierendes Signal bereitstellen;
- eine Recheneinheit (5), welche über Anschlussleitungen (4) mit dem ersten und dem zweiten Sensor (1a, 1b) zum Austausch von Daten verbunden ist, wobei die Recheneinheit (5) zur Verarbeitung der von dem ersten und dem zweiten Drucksensor (1a, 1b) empfangenen Signale ausgebildet ist;
- der Schlauch (2) gegenüber der Umgebung und dem ersten und dem zweiten Drucksensor (1a, 1b) abgedichtet ist, so dass der in dem Schlauch (2) herrschende Innendruck (p₂) des Befüllmediums (3) unabhängig ist von einem Umgebungsdruck (p₁) und dadurch abhängig von einer Temperatur schwankt;
bei dem zur Diagnose der Funktionsfähigkeit der Vorrichtung
- eine temperaturbedingte Änderung des Innendrucks im Betrieb des Fahrzeugs als Kriterium für die Diagnose der Funktionsfähigkeit der Vorrichtung verarbeitet wird.

11. Verfahren nach Anspruch 10, bei dem auf eine funktionsfähige Vorrichtung geschlossen wird, wenn innerhalb einer vorgegeben Zeitspanne und/oder eines Fahrzyklus seit dem Startzeitpunkt eine vorgegebene Druckänderung in dem Druckverlauf ermittelt wird.

12. Verfahren nach Anspruch 10 oder 11, bei dem auf eine funktionsfähige Vorrichtung geschlossen wird, wenn die Druckdifferenz einen vorgegebenen Schwellwert überschreitet.

## Claims

1. A device for detecting the impact of an object on a vehicle, comprising:
- a hose (2), which is filled with a filling medium (3) and has a first end and a second end opposite the first end;
- a first pressure sensor (1a), which is connected to the first end of the hose, and a second pressure sensor (1 b), which is connected to the second end of the hose, wherein the first and the second pressure sensor (1 a, 1 b) in each case provide a signal representing the pressure of the filling medium (3);
- a computing unit (5), which is connected by connection lines (4) to the first and the second pressure sensor (1a, 1b) to exchange data, wherein the computing unit (5) is configured to process the signals received from the first and the second pressure sensor (1 a, 1 b);
**characterised in that**
- the hose (2) is sealed in relation to the surroundings and the first and the second pressure sensor (1a, 1b), so the internal pressure (p₂) of the filling medium (3) prevailing in the hose (2) is independent of an ambient pressure (p₁) and thus fluctuates depending on a temperature;
- the computing unit (5) is configured to process changes in the internal pressure (p₂) due to temperature during operation of the vehicle as a criterion for diagnosing the functional capability of the device.

2. A device according to claim 1, **characterised in that** the sensors (1 a, 1 b) do not comprise a pressure compensation element.

3. A device according to claim 1 or 2, **characterised in that** the first and the second pressure sensor (1a, 1b) do not comprise any ventilation openings or existing ventilation openings of the pressure sensors (1 a, 1 b) are closed in an air-tight manner.

4. A device according to any one of the preceding claims, **characterised in that** the diagnosis of the functional capability of the device comprises a processing of the internal pressure (p₂) over at least several minutes and/or a driving cycle.

5. A device according to any one of the preceding claims, **characterised in that** the computing unit (5) is configured to evaluate the pressure course of the internal pressure (p₂) in order to diagnose the functional capability of the device, wherein a device capable of functioning is indicated when a predetermined pressure change is determined in the pressure course within a predetermined timespan since the starting time.

6. A device according to any one of the preceding claims, **characterised in that** the computing unit (5) is configured to determine a pressure difference of the internal pressure (p₂) between a starting time and a measuring time in order to diagnose the functional capability of the device, wherein a device capable of functioning is indicated when the pressure difference exceeds a predetermined threshold value over a predetermined timespan and/or a driving cycle.

7. A device according to any one of the preceding claims, **characterised in that** the device is arranged in the bumper of the vehicle adjacent to a heat source of the vehicle in order to cause an internal pressure change of the filling medium due to temperature in the hose during operation of the vehicle, more especially after a start-up of the vehicle, within a predetermined timespan.

8. A device according to any one of the preceding claims, wherein the pressure sensors (1 a, 1 b) have a measuring range of more than ±20 mbar, more especially more than ±50 mbar, most preferably ±100 mbar.

9. A device according to claim 8, **characterised in that** the measuring range is selected depending on the volume or type of filling medium provided in the hose.

10. A method for checking a device for detecting the impact of an object on a vehicle, comprising:
- a hose (2), which is filled with a filling medium (3) and has a first end and a second end opposite the first end;
- a first pressure sensor (1a), which is connected to the first end of the hose, and a second pressure sensor (1 b), which is connected to the second end of the hose, wherein the first and the second pressure sensor (1a, 1b) in each case provide a signal representing the pressure of the filling medium (3);
- a computing unit (5), which is connected by connection lines (4) to the first and the second pressure sensor (1a, 1b) to exchange data, wherein the computing unit (5) is configured to process the signals received from the first and the second pressure sensor (1 a, 1 b);
- the hose (2) is sealed in relation to the surroundings and the first and the second pressure sensor (1 a, 1 b), so the internal pressure (p₂) of the filling medium (3) prevailing in the hose (2) is independent of an ambient pressure (p₁) and therefore fluctuates depending on a temperature;
wherein to diagnose the functional capability of the device
- a change in the internal pressure due to temperature during operation of the vehicle is processed as a criterion to diagnose the functional capability of the device.

11. A method according to claim 10, wherein a device capable of functioning is indicated when a predetermined pressure change is determined in the pressure course within a predetermined timespan and/or a driving cycle since the starting time.

12. A method according to claim 10 or 11, wherein a device capable of functioning is indicated when the pressure difference exceeds a predetermined threshold value.

## Revendications

1. Dispositif de détection d'une collision d'un objet avec un véhicule comprenant :
- un tuyau (2) rempli d'un fluide de remplissage (3) qui comporte une première extrémité et une seconde extrémité opposée à la première extrémité,
- un premier détecteur de pression (1a) qui est relié à la première extrémité du tuyau et un second détecteur de pression (1b) qui est relié à la seconde extrémité du tuyau, le premier et le second détecteurs de pression (1a, 1b) fournissant respectivement un signal représentant la pression du fluide de remplissage (3),
- une unité de calcul (5) qui est reliée par l'intermédiaire de conduites de connexion (4) au premier détecteur de pression et au second détecteur de pression (1a, 1b) pour permettre un échange de données, l'unité de calcul (5) étant réalisée pour pouvoir traiter les signaux transmis par le premier et le second détecteurs de pression (1a, 1b),
**caractérisé en ce que**
le tuyau (2) est étanche vis-à-vis de l'environnement ainsi que du premier et du second détecteurs de pression (1a, 1b) de sorte que la pression interne (p₂) du fluide de remplissage (3) régnant dans le tuyau (2) soit indépendante de la pression environnante (p₁) et par suite varie en fonction de la température,
- l'unité de calcul (5) est réalisée pour traiter les variations conditionnées par la température de la pression interne (p₂) en cours du fonctionnement du véhicule en tant que critère pour le diagnostic de l'aptitude au fonctionnement du dispositif.

2. Dispositif conforme à la revendication 1,
**caractérisé en ce que**
les détecteurs (1a, 1b) ne comportent pas d'élément d'équilibrage de pression.

3. Dispositif conforme à l'une des revendications 1 ou 2,
**caractérisé en ce que**
le premier et le second détecteurs de pression (1a, 1b) ne comportent pas d'ouverture de ventilation, ou des ouvertures de ventilation présentes dans les détecteurs de pression (1a, 1b) sont fermées de façon étanche à l'air.

4. Dispositif conforme à l'une des revendications précédentes,
**caractérisé en ce que**
le diagnostic de l'aptitude au fonctionnement du dispositif comprend un traitement de la pression interne (p₂) pendant au moins plusieurs minutes et/ou un cycle de déplacement.

5. Dispositif conforme à l'une des revendications précédentes,
**caractérisé en ce que**
l'unité de calcul (5) est réalisée pour évaluer les variations de la pression interne (p₂), de façon à permettre le diagnostic de l'aptitude au fonctionnement du dispositif, le dispositif étant considéré comme apte au fonctionnement lorsque, pendant un intervalle de temps prédéfini depuis l'instant de démarrage, une variation de pression prédéfinie est déterminée dans les variations de la pression.

6. Dispositif conforme à l'une des revendications précédentes,
**caractérisé en ce que**
l'unité de calcul (5) est réalisée pour déterminer, de façon à effectuer le diagnostic de l'aptitude au fonctionnement du dispositif la différence de la pression interne (p₂) entre l'instant de démarrage et un instant de mesure, le dispositif étant considéré comme apte au fonctionnement lorsque la différence de pression dépasse une valeur de seuil prédéfinie pendant un intervalle de temps prédéfini et/ou un cycle de déplacement.

7. Dispositif conforme à l'une des revendications précédentes,
**caractérisé en ce que**
le dispositif est monté dans le pare-choc du véhicule à proximité d'une source de chaleur du véhicule pour provoquer, pendant le fonctionnement du véhicule, en particulier après un démarrage de ce véhicule, pendant un intervalle de temps prédéfini, une variation de la pression interne du fluide de remplissage présent dans le tuyau conditionnée par la température.

8. Dispositif conforme à l'une des revendications précédentes, dans lequel les détecteurs de pression (1a, 1b) présentent une plage de mesure de ± 20 mbar, en particulier de plus de ±50 mbar, et de façon particulièrement préférentielle, de ± 100 mbar.

9. Dispositif conforme à la revendication 8,
**caractérisé en ce que**
la plage de mesure est choisie en fonction du volume ou du type du fluide de remplissage présent dans le tuyau.

10. Procédé permettant de vérifier un dispositif de détection d'une collision d'un objet avec un véhicule comprenant :
- un tuyau (2) rempli d'un fluide de remplissage (3) qui comprend une première extrémité et une seconde extrémité opposée à la première extrémité,
- un premier détecteur de pression (1a) qui est relié à la première extrémité du tuyau et un second détecteur de pression (1b) qui est relié à la seconde extrémité du tuyau, le premier et le second détecteurs de pression (1a, 1b) fournissant respectivement un signal représentatif de la pression du fluide de remplissage (3),
- une unité de calcul (5) qui est reliée au premier et au second détecteurs (1a, 1b) par des conduites de connexion (4) pour permettre un échange de données, cette unité de calcul (5) étant réalisée pour permettre de traiter les signaux transmis par le premier et le second détecteurs de pression (1a, 1b),
le tuyau (2) est étanche vis-à-vis de l'environnement et du premier et du second détecteurs de pression (1a, 1b) de sorte que la pression interne (p₂) du fluide de remplissage (3) dans le tuyau (2) soit indépendante de la pression environnante (p₁) et par suite varie en fonction de la température,
selon lequel, pour permettre le diagnostic de l'aptitude au fonctionnement du dispositif,
on traite une variation conditionnée par la température de la pression interne pendant le fonctionnement du véhicule en tant que critère pour le diagnostic de l'aptitude de fonctionnement du dispositif.

11. Dispositif conforme à la revendication 10, selon lequel on conclut à un dispositif apte au fonctionnement lorsque, pendant un intervalle de temps prédéfini et/ou un cycle de déplacement depuis l'instant de démarrage une variation de pression prédéfinie est déterminée dans les variations de pression.

12. Procédé conforme à la revendication 10 ou 11, selon lequel on conclut à un dispositif apte au fonctionnement lorsque la différence de pression dépasse une valeur de seuil prédéfinie.
